# FASCICULE DE BREVET EUROPEEN

(11) **EP 3 651 021 B1**
(45) Date de publication et mention de la délivrance du brevet: **30.11.2022**
(21) Numéro de dépôt: 19205057.3
(22) Date de dépôt: 24.10.2019
(51) Int. Cl.: G06F 11/00, G06F 11/07, G06F 11/34

(54) **PROCÉDÉ DE SURVEILLANCE D'UNE TÂCHE, EN PARTICULIER UNE TÂCHE GRAPHIQUE, POUR UN MODULE ÉLECTRONIQUE, EN PARTICULIER D'INTERFACE MULTIMÉDIA, ET DISPOSITIF CORRESPONDANT**
VERFAHREN ZUR ÜBERWACHUNG EINES TASKS, INSBESONDERE EINES GRAPHISCHES TASKS, FÜR EIN ELEKTRONISCHES MODUL, INSBESONDERE EIN MULTIMEDIASCHNITTSTELLEMODUL, UND ENTSPRECHENDER INTEGRIETER SCHALTKREIS
METHOD OF MONITORING A TASK, IN PARTICULAR A GRAPHICAL TASK, FOR AN ELECTRONIC MODULE, IN PARTICULAR A MULTIMEDIA INTERFACE MODULE, AND CORRESPONDING INTEGRATED CIRCUIT

(30) Priorité: 06.11.2018 FR 1860187
(43) Date de publication de la demande: 13.05.2020
(73) Titulaire: STMicroelectronics (Rousset) SAS, 13790 Rousset (FR)
(72) Inventeur: FERRAND, Olivier, 13620 CARRY LE ROUET (FR)
(74) Mandataire: Casalonga

(56) Documents cités:
- KR-A- 20080 067 194
- KR-A- 20130 066 202
- US-A1- 2007 266 345
- US-A1- 2012 159 259

## Description

Des modes de mise en œuvre et de réalisation concernent la surveillance d'une tâche pour un module électronique, plus particulièrement une tâche graphique pour un module d'interface multimédia du type afficheur OLED.

Les dispositifs de surveillance d'une tâche pour un module électronique sont communément désignés par l'homme du métier sous le vocable anglosaxon « Watchdog ».

Les modules électroniques du type interface multimédia, en particulier les afficheurs OLED (pour « Organic Light-Emitting Diode » en anglais), c'est-à-dire afficheur à diode électroluminescente organique, ou encore les afficheurs OLED à matrice active, usuellement désignés par l'acronyme AMOLED pour « Active Matrix OLED », sont avantageux à de nombreux égards et sont de plus en plus utilisés dans toute forme d'application.

Un inconvénient, quasiment exclusif, de ce type d'afficheur est sa durée de vie. En effet, les afficheurs OLED se dégradent lorsqu'ils affichent un signal statique trop longtemps, en particulier un signal statique de lumière blanche.

Bien entendu, d'autres types de modules électroniques peuvent aussi se dégrader en cas d'absence de réalisation d'une tâche, par exemple dans le cas d'un module électronique commandé par un élément annexe éventuellement non-parfaitement adapté ou configuré pour ce module électronique. En effet, il peut être délicat pour un utilisateur non-expert de pallier par anticipation toute situation risquée dans l'utilisation du module électronique.

Le document US 2007/266345 A1 décrit une technique d'analyse de contenu d'images à des fins de préservation du vieillissement prématuré d'un afficheur.

Les documents KR 2008 0067194 A et KR 2013 0066202 A traitent d'analyse de contenu d'images d'un afficheur, notamment au niveau d'une mémoire de l'afficheur, en vue d'identifier un affichage statique.

Il existe par conséquent un besoin de protéger les modules électroniques dans leurs usages, notamment en matière de dégradation due à une absence de réalisation d'une tâche.

Selon un aspect, il est proposé un procédé de surveillance d'une tâche graphique telle qu'un rafraîchissement d'image, pour un module électronique d'interface multimédia tel qu'un afficheur, dans lequel une réalisation de la tâche graphique comprend une communication au module d'interface multimédia d'un signal de rafraîchissement d'image, le signal de rafraîchissement étant un signal de commande typiquement accompagné de données graphiques, ladite communication comprenant une attente d'une réalisation de la tâche, un chronométrage de l'attente cadencé par un signal d'horloge, et au moins une génération d'un signal d'alerte si le chronométrage de l'attente a dépassé une valeur de référence.

Le signal d'horloge et la valeur de référence sont avantageusement configurés conjointement de façon à protéger l'usage du module électronique, et en relation avec ladite tâche.

Selon un mode de mise en œuvre, le chronométrage de l'attente comprend un comptage à rechargement automatique comportant une incrémentation ou une décrémentation cadencée par le signal d'horloge, et une réinitialisation automatique de la valeur du comptage à une valeur de départ lorsque la valeur du comptage atteint une valeur de fin, et une génération d'un signal de fin à chaque réinitialisation automatique, ladite au moins une génération comportant la génération du signal de fin formant le signal d'alerte.

Par exemple, le comptage à rechargement automatique comprend une réinitialisation de la valeur du comptage à la valeur de départ, sans génération du signal de fin, sur commande d'un signal de rechargement forcé, et dans lequel un signal représentatif de ladite réalisation de la tâche est utilisé comme signal de rechargement forcé.

Ce mode de mise en œuvre présente l'avantage d'être simple et fiable, notamment car des signaux habituels de commande d'interface multimédia sont utilisés, sans mettre en œuvre une analyse éventuellement complexe et sujette à des dysfonctionnements.

Avantageusement, le procédé comporte en outre une comparaison de la valeur du comptage avec au moins une autre valeur de référence, ladite au moins une génération comprenant une génération d'un signal d'alerte préliminaire lorsque ladite valeur du compte égale ladite au moins une autre valeur de référence.

Ainsi peut-on disposer de signaux d'alertes supplémentaires à moindre coût.

Selon un mode de mise en œuvre, ledit signal d'horloge correspond à un comptage d'une quantité donnée de trames d'image traitées par le module d'interface multimédia.

Un tel signal d'horloge peut avantageusement être un signal déclencheur élaboré au moyen d'un procédé décrit dans la demande de brevet Français ayant pour titre « Procédé d'élaboration de signaux déclencheurs pour une commande d'une interface multimédia, et circuit intégré correspondant », déposée au nom de la demanderesse le même jour que la présente demande de brevet. Cela étant, le signal d'horloge peut également provenir d'une autre source, tel qu'une unité de commande du module d'interface multimédia. De manière générale, le signal d'horloge et la durée de référence sont configurés conjointement de façon à protéger l'usage du module d'interface multimédia en relation avec ladite tâche graphique, ce mode de mise en œuvre est un exemple avantageux pour ladite configuration conjointe, utilisant un signal directement représentatif de l'usage du module d'interface multimédia en relation avec ladite tâche graphique.

Selon un mode de mise en œuvre, ledit module d'interface multimédia est un module d'affichage à diodes électroluminescentes organiques.

Avantageusement, ladite valeur de référence correspond à une durée au-delà de laquelle risque d'être endommagé, au moins en partie, le module d'affichage à diodes électroluminescentes organiques affichant un signal statique.

Le procédé selon ces modes de mise en œuvre permet de résoudre en particulier l'inconvénient susmentionné de dégradation des afficheurs OLED lorsqu'ils affichent un signal statique trop longtemps.

Selon un autre aspect, il est proposé un dispositif de surveillance d'une tâche graphique, telle qu'un rafraîchissement d'image, pour un module électronique d'interface multimédia tel qu'un afficheur, comportant un chronomètre configuré pour attendre une réalisation de la tâche graphique, la réalisation de la tâche graphique comprenant une communication d'un signal de rafraîchissement d'image, le signal de rafraîchissement étant un signal de commande typiquement accompagné de données graphiques, au module d'interface multimédia, par un module externe de commande de l'interface multimédia, et chronométrer l'attente de façon cadencée par un signal d'horloge, et configuré pour générer au moins un signal de alerte si le chronométrage de l'attente a dépassé au moins une valeur de référence.

Selon un mode de réalisation, le chronomètre comporte un compteur à rechargement automatique configuré pour incrémenter ou décrémenter une valeur du compteur de façon cadencée par le signal d'horloge, et, lorsque la valeur du compteur atteint une valeur de fin, réinitialiser automatiquement la valeur du compteur à une valeur de départ et générer un signal de fin, le signal de fin formant le signal de sécurité.

Par exemple, le compteur est en outre configuré pour recharger la valeur du compteur à la valeur de départ, sans générer le signal de fin, sur commande d'un signal de rechargement forcé, et dans lequel un signal représentatif de ladite réalisation de la tâche est utilisé comme signal de rechargement forcé.

Avantageusement, le dispositif comporte en outre un comparateur configuré pour comparer la valeur du compteur avec au moins une autre valeur de référence, et pour générer respectivement au moins un signal d'alerte préliminaire lorsque la valeur du compteur égale ladite au moins une autre valeur de référence.

Selon un mode de réalisation, le dispositif comporte un dispositif de génération de signaux déclencheurs configuré pour générer ledit signal d'horloge correspondant à un comptage d'une quantité donnée de trames d'image affichées par l'interface multimédia.

Selon un mode de réalisation, le dispositif est dédié à un module d'interface multimédia du type module d'affichage à diodes électroluminescentes organiques.

Avantageusement, ladite au moins une valeur de référence correspond à une durée au-delà de laquelle risque d'être endommagé, au moins en partie, le module d'affichage à diodes électroluminescentes organiques affichant un signal statique.

Il est également proposé un circuit intégré comportant un dispositif tel que défini ci avant, ainsi qu'un appareil électronique, tel qu'un téléphone portable ou une montre connectée, comportant le circuit intégré ou un dispositif tel que défini ci-avant.

D'autres avantages et caractéristiques de l'invention apparaîtront à l'examen de la description détaillée de modes de réalisation et de mise en œuvre, nullement limitatifs, et des dessins annexés sur lesquels :
- les figures 1 et 2 illustrent schématiquement différents modes de mise en œuvre de l'invention ;
- les figures 3 à 5 illustrent schématiquement différents modes de réalisation de l'invention.

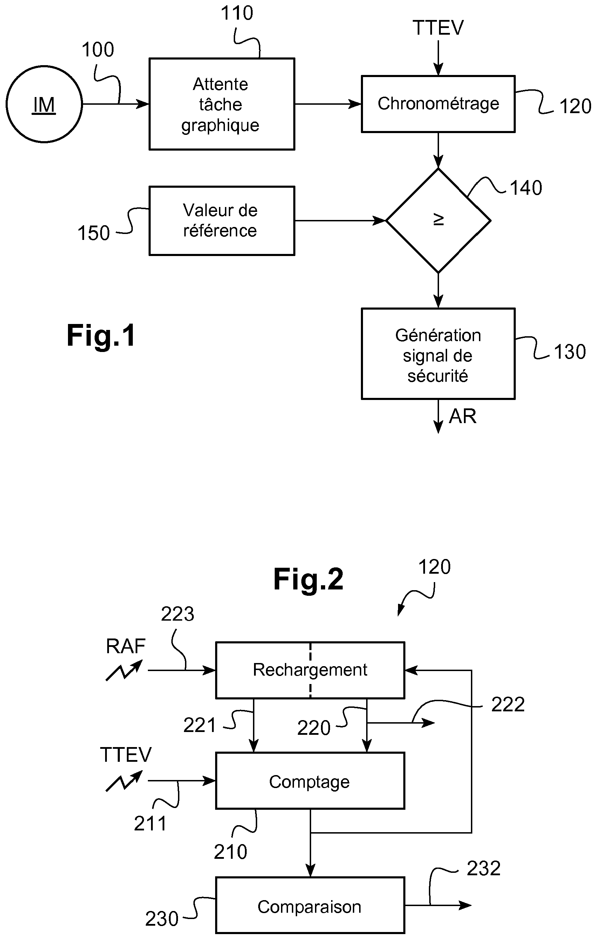

La figure 1 illustre un procédé de surveillance d'une tâche 100 pour un module électronique IM, comprenant une attente d'une réalisation de la tâche 110, un chronométrage de l'attente 120 cadencé par un signal d'horloge TTEV, et au moins une génération 130 d'un signal d'alerte AR si le chronométrage de l'attente a dépassé 140 une valeur de référence 150.

La figure 1 se réfère à un cas particulier de module électronique d'interface multimédia, tel qu'un afficheur et préférentiellement du type afficheur à diode électroluminescentes organique « OLED », la tâche surveillée étant une tâche graphique.

Le procédé est voué à être mis en œuvre par un dispositif de circuit intégré.

Le procédé comprend une attente 110 d'une réalisation de la tâche graphique 100 et un chronométrage de l'attente 120, cadencé par un signal d'horloge TTEV.

La réalisation de la tâche graphique 100 peut comprendre une communication au module d'interface multimédia IM d'un signal de rafraîchissement d'image.

Le signal de rafraîchissement d'image, par exemple transmis au module d'interface multimédia IM en provenance d'un élément de commande externe, peut par exemple être un signal spécifique issu d'une instruction logicielle, ou être généré automatique à chaque fois que l'élément de commande donne une instruction de rafraichissement d'image. Une instruction de rafraichissement d'image, dans le cadre d'un module du type afficheur, comprend typiquement des nouvelles données graphiques à afficher.

La valeur courante du chronométrage 120 est comparée 140 à au moins une valeur de référence 150. Si la valeur courante du chronométrage 120 est supérieure ou égale à ladite valeur de référence, au moins un signal d'alerte respectif AR est généré 130.

En d'autres termes, un signal d'alerte AR est généré 130 si le chronométrage de l'attente a dépassé 140 une valeur de référence 150.

Par exemple, le signal d'horloge TTEV correspond à un comptage d'une quantité donnée de trames d'image traitées par le module d'interface multimédia IM.

Pour un module d'interface multimédia IM d'afficheur, par « quantité de trames d'image traitées » on entend la quantité de trames affichées à la fréquence de rafraîchissement de l'afficheur, définie par le nombre d'images pouvant être affichées par seconde, autrement désigné par fréquence de balayage vertical.

La distinction doit être faite entre la fréquence de rafraichissement de l'afficheur (balayage vertical), qui est une caractéristique intrinsèque du module d'interface multimédia, et le signal de rafraichissement d'image, qui est un signal de commande typiquement accompagné de données graphiques provenant par exemple d'un élément de commande externe.

En d'autres termes, par signal de rafraichissement d'image, on entend un signal introduisant des variations dans le signal affiché, tandis que la quantité de trames d'image traitées à la fréquence de rafraîchissement peut comprendre des trames identiques successives, c'est-à-dire l'affichage d'un signal statique.

Ainsi, le signal d'horloge TTEV, correspondant à un comptage d'une quantité donnée de trames d'image traitées par le module d'interface multimédia IM, peut être représentatif d'un affichage d'un signal statique.

Dans l'exemple d'un module du type afficheur OLED, ce mode de mise en œuvre permet de protéger l'afficheur d'une usure prématurée.

A cet égard, ladite valeur de référence 150 est déterminée pour correspondre à une durée au-delà de laquelle risque d'être endommagé le module d'affichage OLED affichant un signal statique.

Bien entendu, la valeur de référence, comptée sur le signal d'horloge TTEV, est établie en tenant compte des limites matérielles du module d'affichage OLED utilisé.

Ainsi, la valeur de référence et le signal d'horloge sont tous les deux programmables, afin de les configurer conjointement pour protéger l'usage d'un module d'interface multimédia donné en relation avec une tâche graphique donnée.

Pour sa programmation, la valeur de référence peut par exemple est une variable enregistrée dans un registre.

Pour sa programmation, le signal d'horloge TTEV peut être un signal d'horloge partagé externe, ou préférentiellement être un signal dédié généré par un microcontrôleur, ou plus préférentiellement être un signal de synchronisation éventuellement transmis par le module d'interface multimédia, ou encore plus préférentiellement être un signal déclencheur élaboré par un procédé ou un circuit intégré tel qu'enseigné dans la demande de brevet Français ayant pour titre « Procédé d'élaboration de signaux déclencheurs pour une commande d'une interface multimédia, et circuit intégré correspondant », déposée par la demanderesse le même jour que la présente demande de brevet.

En effet, le procédé d'élaboration de signaux déclencheurs pour une commande d'une interface multimédia, et le circuit intégré correspondant susmentionnés permettent de générer des signaux déclencheurs TTEV flexibles et adaptables, et ainsi de générer un signal d'horloge parfaitement configuré pour protéger l'usage d'un module d'interface multimédia donné en relation avec une tâche graphique donnée.

Par ailleurs, le procédé est avantageusement mis en œuvre distinctement des opérations de commande de l'interface multimédia (généralement faites par un microcontrôleur). Ainsi, le procédé permet de protéger l'afficheur en cas de dysfonctionnement desdites opérations de commande, même dans l'éventualité où ces dernières comprendraient une mesure préventive comparable.

La figure 2 représente un exemple de mode de mise en œuvre de chronométrage 120 d'un procédé tel que décrit en relation avec la figure 1.

Dans cet exemple, le procédé comprend, pour chronométrer l'attente 120, un comptage à rechargement automatique 210 cadencée par un signal 211 du type signal d'horloge. Le signal d'horloge TTEV est directement utilisé pour cadencer 211 le compteur 210.

Le comptage 210 peut indifféremment être un comptage croissant, comprenant une incrémentation à chaque front montant du signal d'horloge TTEV, ou un comptage décroissant, comprenant une décrémentation à chaque front montant du signal d'horloge TTEV.

La valeur du comptage est automatiquement réinitialisé 220 à une valeur de départ (usuellement zéro pour un comptage croissant et une valeur programmable pour un comptage décroissant) lorsque la valeur du comptage atteint une valeur de fin (usuellement une valeur programmable pour un comptage croissant et zéro pour un comptage décroissant).

Lorsque la valeur du comptage atteint la valeur de fin, un signal de fin 222 est généré.

Ainsi, la valeur programmable de départ (pour un comptage décroissant) ou de fin (pour un comptage croissant) est établie de façon à ce que la fin du comptage soit représentative d'une durée de référence (valeur de référence), en fonction du signal d'horloge TTEV.

La valeur de référence correspond à une durée au-delà de laquelle l'absence de tâche graphique est problématique.

Ainsi, le signal de fin 222 peut former directement le signal d'alerte AR.

En outre, le comptage 210 à rechargement automatique comprend une réinitialisation 221 de la valeur du compte à la valeur de départ, sans génération du signal de fin 222, sur commande d'un signal de rechargement forcé 223.

Ici, le signal RAF représentatif de la réalisation de la tâche graphique est directement utilisé comme signal de rechargement forcé 223.

Ainsi, après réalisation de la tâche graphique, la valeur du comptage est réinitialisée et l'écoulement de la durée de référence complète est attendu avant de générer le signal d'alerte AR.

Accessoirement, le procédé peut comprendre une comparaison 230 de la valeur dudit comptage avec au moins une autre valeur de référence, éventuellement elle aussi programmable et stockée dans un registre.

Si la valeur du comptage 210 égale ladite au moins une autre valeur de référence 150, alors un signal d'alerte préliminaire 232 respectif est généré.

Les signaux d'alertes 222, 232, préliminaires ou non, peuvent permettre à une commande de l'interface multimédia d'enclencher des mesures de protection.

Par exemple, dans le cas mentionné ci-avant d'une prévention d'affichage statique sur un afficheur OLED, la commande peut prévoir un mode veille affichant une image mobile, ou une extinction de l'écran. Un arrêt forcé de l'écran peut également être prévu en dernier recours, ce qui est avantageux par exemple dans un cas de dysfonctionnement de la commande.

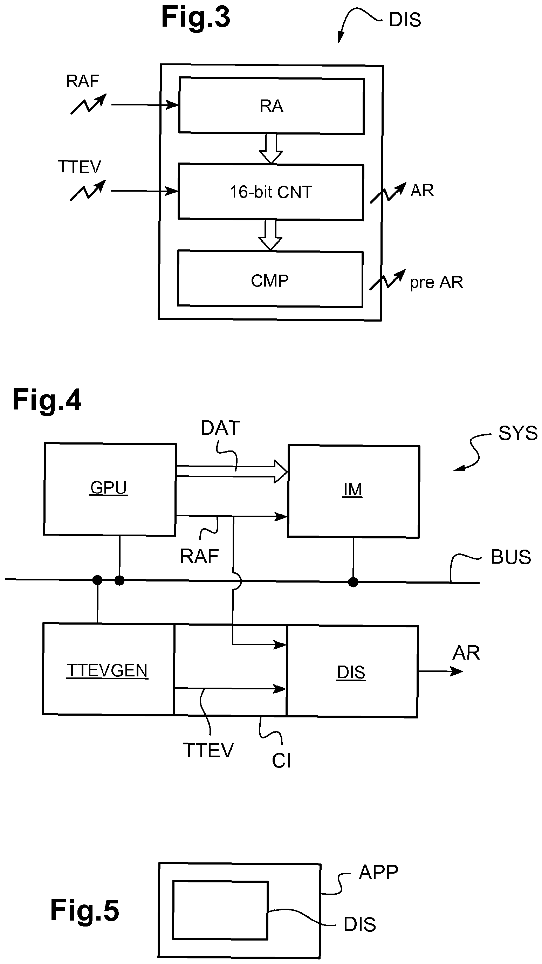

La figure 3 illustre un exemple particulier de dispositif DIS de surveillance d'une tâche d'un module électronique.

Le dispositif de surveillance DIS est configuré pour attendre une réalisation de la tâche, chronométrer l'attente de façon cadencée par au moins un signal d'horloge TTEV, et générer au moins un signal de sécurité AR si le chronométrage de l'attente a dépassé au moins une valeur de référence.

De même, la figure 3 se réfère à un exemple particulier dans lequel le module électronique est une interface multimédia, tel qu'un afficheur et préférentiellement un afficheur OLED à diodes électroluminescentes organiques, la tâche surveillée étant une tâche graphique.

Le dispositif de surveillance DIS comporte un compteur CNT, par exemple sur 16 bits à rechargement automatique RA. La valeur du compteur CNT est incrémenté ou décrémenté de façon cadencée par un signal d'horloge TTEV.

Dans la suite, on considérera l'exemple d'un compteur descendant dont la valeur est décrémentée par le signal d'horloge TTEV. Cet exemple n'est pas limitatif.

La valeur de départ du compteur est automatiquement chargée à partir d'un registre de rechargement automatique RA. Lorsque la valeur du compteur est décrémentée jusqu'à une valeur de fin, usuellement zéro, la valeur de départ est automatiquement réinitialisée, et un signal de fin de décrémentation AR est généré. Ici, le signal de fin de décrémentation est directement utilisé comme signal de sécurité AR.

Néanmoins, un signal de rechargement forcé peut permettre de commander une réinitialisation de la valeur du compteur CNT à sa valeur de départ avant d'atteindre zéro, sans générer le signal de fin de décrémentation AR. Le signal RAF représentatif de la réalisation de la tâche graphique est directement utilisé comme signal de rechargement forcé.

Le dispositif de surveillance DIS peut comporter accessoirement un comparateur CMP configuré pour comparer la valeur courante du compteur CNT avec au moins une valeur de référence enregistrée dans un registre. Lorsque la valeur du compteur atteint ladite au moins une valeur de référence, au moins un signal d'alerte préliminaire preAR respectif est généré afin de signaler l'approche d'une situation dangereuse.

Le dispositif de surveillance DIS est tout particulièrement adapté pour un module d'interface multimédia du type afficheur à diodes électroluminescentes organiques OLED.

En effet, une absence de rafraîchissement de l'affichage pendant une durée trop longue peut endommager irréversiblement l'interface d'afficheur OLED.

Ainsi, l'événement résultant de la tâche graphique peut avantageusement comprendre un signal RAF représentatif d'un rafraîchissement de l'image.

La figure 4 illustre un exemple d'application d'un dispositif DIS tel que décrit ci-avant en relation avec la figure 3, dans un système comportant un circuit intégré CI comportant le dispositif DIS, le module d'interface multimédia IM, et une unité de commande GPU de l'interface multimédia IM. Les différents éléments sont notamment reliés par un bus de données BUS.

Dans cet exemple, le module d'interface multimédia IM est un module d'affichage à diodes électroluminescentes organiques OLED, et le dispositif DIS est dédié à un module d'interface multimédia IM du type module d'affichage à diodes électroluminescentes organiques OLED.

Dans cet exemple, le circuit intégré CI comportant le dispositif DIS comporte en outre un dispositif de génération de signaux déclencheurs TTEVGEN configuré pour générer ledit signal d'horloge TTEV.

Le signal d'horloge TTEV correspond par exemple à un comptage d'une quantité donnée de trames d'image affichées par l'interface multimédia IM, tel que décrit dans la demande de brevet Français ayant pour titre « Procédé d'élaboration de signaux déclencheurs pour une commande d'une interface multimédia, et circuit intégré correspondant », déposée par la demanderesse le même jour que la présente demande de brevet.

Ici aussi on entend par signal de rafraichissement d'image, un signal introduisant des variations dans le signal affiché, tandis que la quantité de trames d'image traitées à la fréquence de rafraichissement peut comprendre des trames identiques successives, c'est-à-dire l'affichage d'un signal statique.

Dans le système SYS, l'unité de commande GPU peut communiquer des données d'images DAT au module d'interface multimédia IM, ainsi que des signaux de commande, tel qu'un signal de rafraichissement d'image RAF. Le signal de rafraichissement d'image RAF communiqué par l'unité de commande GPU commande l'affichage de nouvelles données d'image remplaçant des anciennes données d'image.

Dans cet exemple, le dispositif DIS est configuré pour attendre, en tant que ladite tâche graphique, une communication du signal de rafraîchissement d'image RAF au module d'interface multimédia IM, par un module de commande de l'interface multimédia GPU.

Le dispositif DIS est configuré pour générer le signal d'alerte AR si aucun rafraichissement d'image RAF n'est communiqué pendant une durée au-delà de laquelle risque d'être endommagé, au moins en partie, le module d'affichage à diodes électroluminescentes organiques OLED affichant un signal statique.

La figure 5 illustre schématique un appareil électronique, tel qu'un téléphone portable ou une montre connectée, comportant un dispositif DIS tel que décrit précédemment en relation avec les figures 3 ou 4, éventuellement incorporé à un circuit intégré CI.

Par ailleurs l'invention n'est pas limitée à ces modes de réalisation et de mise en œuvre mais en embrasse toutes les variantes, on rappelle notamment que la surveillance d'une tâche peut s'appliquer à un module électronique d'un autre type qu'un afficheur OLED, la tâche surveillée pouvant elle aussi être de nature différente.

## Revendications

1. Procédé de surveillance d'une tâche graphique (100) telle qu'un rafraîchissement d'image, pour un module électronique d'interface multimédia (IM) tel qu'un afficheur, dans lequel une réalisation de la tâche graphique comprend une communication au module d'interface multimédia (IM) d'un signal de rafraîchissement d'image (RAF), le signal de rafraîchissement d'image (RAF) étant un signal de commande typiquement accompagné de données graphiques, ledit procédé comprenant une attente d'une réalisation de la tâche (110), un chronométrage de l'attente (120) cadencé par un signal d'horloge (TTEV), et au moins une génération (130) d'un signal d'alerte (AR) si le chronométrage de l'attente a dépassé (140) une valeur de référence (150).

2. Procédé selon la revendication 1, dans lequel le chronométrage de l'attente (120) comprend un comptage à rechargement automatique comportant une incrémentation ou une décrémentation (210) cadencée par le signal d'horloge (TTEV), et une réinitialisation automatique (220) de la valeur du comptage à une valeur de départ lorsque la valeur du comptage atteint une valeur de fin, et une génération d'un signal de fin (222) à chaque réinitialisation automatique, ladite au moins une génération (130) comportant la génération du signal de fin (222) formant le signal d'alerte (AR).

3. Procédé selon la revendication 2, dans lequel le comptage à rechargement automatique comprend une réinitialisation (221) de la valeur du comptage à la valeur de départ, sans génération du signal de fin (222), sur commande d'un signal de rechargement forcé, et dans lequel un signal (RAF) représentatif de ladite réalisation de la tâche est utilisé comme signal de rechargement forcé.

4. Procédé selon l'une des revendications 2 ou 3, comportant en outre une comparaison (230) de la valeur du comptage avec au moins une autre valeur de référence (150), ladite au moins une génération (130) comprenant une génération d'un signal d'alerte préliminaire (232) lorsque ladite valeur du compte égale ladite au moins une autre valeur de référence (150).

5. Procédé selon l'une des revendications précédentes, dans lequel ledit signal d'horloge (TTEV) correspond à un comptage d'une quantité donnée de trames d'image traitées par le module d'interface multimédia (IM).

6. Procédé selon l'une des revendications précédentes, dans lequel ledit module d'interface multimédia (IM) est un module d'affichage à diodes électroluminescentes organiques (OLED).

7. Procédé selon la revendication 6, dans lequel ladite valeur de référence (150) correspond à une durée au-delà de laquelle risque d'être endommagé, au moins en partie, le module d'affichage à diodes électroluminescentes organiques (OLED) affichant un signal statique.

8. Dispositif de surveillance d'une tâche graphique, telle qu'un rafraîchissement d'image, pour un module électronique d'interface multimédia (IM) tel qu'un afficheur, comportant un chronomètre configuré pour attendre une réalisation de la tâche graphique, la réalisation de la tâche graphique comprenant une communication d'un signal de rafraîchissement d'image (RAF), le signal de rafraîchissement d'image (RAF) étant un signal de commande typiquement accompagné de données graphiques, au module d'interface multimédia (IM), par un module externe de commande de l'interface multimédia (GPU), et chronométrer l'attente de façon cadencée par un signal d'horloge (TTEV), et configuré pour générer au moins un signal de alerte (AR) si le chronométrage de l'attente a dépassé au moins une valeur de référence.

9. Dispositif selon la revendication 8, dans lequel le chronomètre comporte un compteur à rechargement automatique configuré pour incrémenter ou décrémenter une valeur du compteur de façon cadencée par le signal d'horloge (TTEV), et, lorsque la valeur du compteur atteint une valeur de fin, réinitialiser automatiquement la valeur du compteur à une valeur de départ et générer un signal de fin, le signal de fin formant le signal de sécurité (AR).

10. Dispositif selon la revendication 9, dans lequel le compteur est en outre configuré pour recharger la valeur du compteur à la valeur de départ, sans générer le signal de fin (AR), sur commande d'un signal de rechargement forcé, et dans lequel un signal (RAF) représentatif de ladite réalisation de la tâche est utilisé comme signal de rechargement forcé.

11. Dispositif selon l'une des revendications 9 ou 10, comportant en outre un comparateur configuré pour comparer la valeur du compteur avec au moins une autre valeur de référence, et pour générer respectivement au moins un signal d'alerte préliminaire (preAR) lorsque la valeur du compteur égale ladite au moins une autre valeur de référence.

12. Dispositif selon l'une des revendications 8 à 11, comportant un dispositif de génération de signaux déclencheurs (TTEVGEN) configuré pour générer ledit signal d'horloge (TTEV) correspondant à un comptage d'une quantité donnée de trames d'image affichées par l'interface multimédia (IM).

13. Dispositif selon l'une des revendications 8 à 12, pour un module d'interface multimédia (IM) du type module d'affichage à diodes électroluminescentes organiques (OLED).

14. Dispositif selon la revendication 13, dans lequel ladite au moins une valeur de référence correspond à une durée au-delà de laquelle risque d'être endommagé, au moins en partie, le module d'affichage à diodes électroluminescentes organiques (OLED) affichant un signal statique.

15. Circuit intégré (CI) comportant un dispositif (DIS) selon l'une des revendications 8 à 14.

16. Appareil électronique, tel qu'un téléphone portable ou une montre connectée, comportant un dispositif (DIS) selon l'une des revendications 8 à 14 ou un circuit intégré (CI) selon la revendication 15.

## Patentansprüche

1. Verfahren zum Überwachen einer grafischen Aufgabe (100), wie etwa eine Bildaktualisierung, für ein elektronisches Multimedia-Schnittstellenmodul (IM), wie etwa einen Anzeiger, wobei eine Ausführung der grafischen Aufgabe eine Kommunikation eines Bildaktualisierungssignals (RAF) an das Multimedia-Schnittstellenmodul (IM) umfasst, wobei das Bildaktualisierungssignal (RAF) ein Steuersignal ist, das typischerweise von Grafikdaten begleitet wird, wobei das Verfahren eine Frist der Ausführung der Aufgabe (110) umfasst, eine Zeitmessung der Frist (120), die von einem Taktsignal (TTEV) getaktet ist, und mindestens eine Erzeugung (130) eines Warnsignals (AR), wenn die Zeitmessung der Frist einen Referenzwert (150) überschritten (140) hat.

2. Verfahren nach Anspruch 1, wobei die Zeitmessung der Frist (120) eine automatische Wiederaufladezählung umfasst, die eine durch das Taktsignal (TTEV) getaktete Inkrementierung oder Dekrementierung (210) beinhaltet, und eine automatische Rückstellung (220) des Zählwerts auf einen Startwert, wenn der Zählwert einen Endwert erreicht, und eine Erzeugung eines Endsignals (222) bei jeder automatischen Rückstellung, wobei die mindestens eine Erzeugung (130) die Erzeugung des Endsignals (222) beinhaltet, ein Warnsignal (AR) bildend.

3. Verfahren nach Anspruch 2, wobei die automatische Wiederaufladezählung eine Rückstellung (221) des Zählwerts auf den Startwert ohne Erzeugung des Endsignals (222) auf Befehl eines erzwungenen Wiederaufladesignals umfasst, und wobei ein Signal (RAF), das für die Ausführung der Aufgabe repräsentativ ist, als erzwungenes Wiederaufladesignal verwendet wird.

4. Verfahren nach einem der Ansprüche 2 oder 3, ferner einen Vergleich (230) des Zählwerts mit mindestens einem anderen Referenzwert (150) beinhaltend, wobei die mindestens eine Erzeugung (130) eine Erzeugung eines vorgängigen Warnsignals (232) umfasst, wenn der Wert der Zählung gleich dem mindestens einen anderen Referenzwert (150) ist.

5. Verfahren nach einem der vorhergehenden Ansprüche, wobei das Taktsignal (TTEV) einer Zählung einer bestimmten Menge von Bildrastern entspricht, die vom Multimedia-Schnittstellenmodul (IM) verarbeitet werden.

6. Verfahren nach einem der vorhergehenden Ansprüche, wobei das Multimedia-Schnittstellenmodul (IM) ein Anzeigemodul mit organischen Leuchtdioden (OLED) ist.

7. Verfahren nach Anspruch 6, wobei der Referenzwert (150) einer Zeitdauer entspricht, über die hinaus das Anzeigemodul mit organischen Leuchtdioden (OLED) mindestens, das ein statisches Signal anzeigt, teilweise beschädigt werden kann.

8. Vorrichtung zum Überwachen einer grafischen Aufgabe, wie etwa eine Bildaktualisierung, für ein elektronisches Multimedia-Schnittstellenmodul (IM), wie etwa einen Anzeiger, eine Stoppuhr beinhaltend, konfiguriert, um eine Ausführung der grafischen Aufgabe zu überwachen, wobei die Ausführung der grafischen Aufgabe eine Kommunikation eines Bildaktualisierungssignals (RAF) umfasst, wobei das Bildaktualisierungssignal (RAF) ein Steuersignal ist, das typischerweise mit Grafikdaten begleitet wird, an das Multimedia-Schnittstellenmodul (IM) durch ein externes Multimedia-Schnittstellensteuermodul (GPU), und um die Zeitmessung der Frist durch ein Taktsignal (TTEV) getaktet durchzuführen, und konfiguriert, um mindestens ein Warnsignal (AR) zu erzeugen, wenn die Zeitmessung der Frist mindestens einen Referenzwert überschritten hat.

9. Vorrichtung nach Anspruch 8, wobei die Stoppuhr einen automatischen Wiederaufladezähler beinhaltet, konfiguriert, um einen Wert des Zählers in einer durch das Taktsignal (TTEV) getakteten Weise zu inkrementieren oder zu dekrementieren, und, wenn der Wert des Zählers einen Endwert erreicht, den Wert des Zählers automatisch auf einen Startwert zurückzusetzen und ein Endsignal zu erzeugen, wobei das Endsignal das Sicherheitssignal (AR) bildet.

10. Vorrichtung nach Anspruch 9, wobei der Zähler ferner konfiguriert ist, um den Wert des Zählers auf den Startwert wieder aufzuladen, ohne das Endsignal (AR) zu erzeugen, auf Befehl eines erzwungenen Wiederaufladesignals, und wobei ein Signal (RAF), das für die Ausführung der Aufgabe repräsentativ ist, als erzwungenes Wiederaufladesignal verwendet wird.

11. Vorrichtung nach einem der Ansprüche 9 oder 10, ferner einen Komparator beinhaltend, konfiguriert, um den Wert des Zählers mit mindestens einem anderen Referenzwert zu vergleichen, und um jeweils mindestens ein vorgängiges Warnsignal (preAR) zu erzeugen, wenn der Wert des Zählers gleich dem mindestens einen anderen Referenzwert ist.

12. Vorrichtung nach einem der Ansprüche 8 bis 11, eine Erzeugungsvorrichtung von Auslösesignalen (TTEVGEN) beinhaltend, konfiguriert, um das Taktsignal (TTEV) zu erzeugen, das einer Zählung einer bestimmten Menge von Bildrastern entspricht, die von der Multimedia-Schnittstelle (IM) angezeigt werden.

13. Vorrichtung nach einem der Ansprüche 8 bis 12, für ein Multimedia-Schnittstellenmodul (IM) vom Typ Anzeigemodul mit organischen Leuchtdioden (OLED).

14. Vorrichtung nach Anspruch 13, wobei der mindestens eine Referenzwert einer Zeitdauer entspricht, über die hinaus mindestens teilweise die Gefahr der Beschädigung des Anzeigemoduls mit organischen Leuchtdioden (OLED), das ein statisches Signal anzeigt, besteht.

15. Integrierter Schaltkreis (CI), eine Vorrichtung (DIS) nach einem der Ansprüche 8 bis 14 beinhaltend.

16. Elektronisches Gerät, wie etwa ein Mobiltelefon oder eine Smartwatch, eine Vorrichtung (DIS) nach einem der Ansprüche 8 bis 14 beinhaltend oder einen integrierten Schaltkreis (CI) nach Anspruch 15.

## Claims

1. A method for monitoring a graphical task (100) such as an image refresh, for an electronic module of multimedia interface (IM) such as a display, wherein performing the graphical task comprises communicating an image refresh signal (RAF) to the multimedia interface (IM) module, the image refresh signal (RAF) being a control signal typically accompanied with graphical data, said method comprising waiting for performing the task (110), timing the wait (120) clocked by a clock signal (TTEV), and at least generating (130) an alert signal (AR) if timing the wait has exceeded (140) a reference value (150).

2. The method according to claim 1, wherein timing the wait (120) comprises automatic-reload counting including an incrementation or a decrementation (210) clocked by the clock signal (TTEV), and automatically resetting (220) the counting value to a start value when the counting value reaches an end value, and generating an end signal (222) at each automatic reset, said at least one generation (130) including generating the end signal (222) forming the alert signal (AR).

3. The method according to claim 2, wherein the automatic reload counting comprises resetting (221) the counting value to the start value, without generating the end signal (222), on command of a forced reload signal, and wherein a signal (RAF) representative of said performance of the task is used as a forced reload signal.

4. The method according to one of claims 2 or 3, further including comparing (230) the counting value with at least one other reference value (150), said at least one generation (130) comprising generating a preliminary alert signal (232) when said counting value equals said at least one other reference value (150).

5. The method according to one of the preceding claims, wherein said clock signal (TTEV) corresponds to counting a given amount of image frames processed by the multimedia interface (IM) module.

6. The method according to one of the preceding claims, wherein said multimedia interface (IM) module is a display module with organic light emitting diodes (OLED).

7. The method according to claim 6, wherein said reference value (150) corresponds to the duration beyond which the display module with organic light emitting diodes (OLED) displaying a static signal is at risk of being, at least partly, damaged.

8. A device for monitoring a graphical task, such as an image refresh, for an electronic module of multimedia interface (IM) such as a display, including a timer configured to wait for performing the graphical task, performing the graphical task comprising communicating an image refresh signal (RAF), the image refresh signal (RAF) being a control signal typically accompanied with graphical data, to the multimedia interface (IM) module, by an external module for controlling the multimedia interface (GPU), and time the wait in a clocked way by a clock signal (TTEV), and configured to generate at least one alert signal (AR) if timing the wait has exceeded at least one reference value.

9. The device according to claim 8, wherein the timer includes an automatic reload counter configured to increment or decrement a counter value in a clocked way by the clock signal (TTEV), and, when the counter value reaches an end value, automatically reset the counter value to a start value and generate an end signal, the end signal forming the safety signal (AR).

10. The device according to claim 9, wherein the counter is further configured to reload the counter value to the start value, without generating the end signal (AR), on command of a forced reload signal, and wherein a signal (RAF) representative of said performance of the task is used as a forced reload signal.

11. The device according to one of claims 9 or 10, further including a comparator configured to compare the counter value with at least one other reference value, and to respectively generate at least one preliminary alert signal (preAR) when the counter value equals said at least one other reference value.

12. The device according to one of claims 8 to 11, including a device for generating trigger signals (TTEVGEN) configured to generate said clock signal (TTEV) corresponding to counting a given amount of image frames displayed by the multimedia interface (IM).

13. The device according to one of claims 8 to 12, for a multimedia interface (IM) module of the display module with organic light emitting diodes (OLED) type.

14. The device according to claim 13, wherein said at least one reference value corresponds to a duration beyond which the display module with organic light emitting diodes (OLED) displaying a static signal is at risk of being, at least partly, damaged.

15. An integrated circuit (CI) including a device (DIS) according to one of claims 8 to 14.

16. An electronic apparatus, such as a mobile phone or a connected watch, including a device (DIS) according to one of claims 8 to 14 or an integrated circuit (CI) according to claim 15.
